Europäisches Patentamt

European Patent Office

Office européen des brevets

(11) Veröffentlichungsnummer: **0 395 932**

**A2**

(12) **EUROPÄISCHE PATENTANMELDUNG**

(21) Anmeldenummer: **90107210.8**

(22) Anmeldetag: **14.04.90**

(51) Int. Cl.⁵: **G01J 1/44, G01N 21/53**

(30) Priorität: **05.05.89 IT 2038489**

(43) Veröffentlichungstag der Anmeldung:
**07.11.90 Patentblatt 90/45**

(84) Benannte Vertragsstaaten:
**AT CH DE ES FR GB LI NL**

(71) Anmelder: **I.V.E.L. S.R.L.**
**Via Mascagni, 13**
**I-20032 Cormano (Milano)(IT)**

(72) Erfinder: **Breseghello, Pietro Romano**
**Via Villa 20**
**I-20057 Vedano Al Lambro (Milano)(IT)**

(74) Vertreter: **Jaumann, Paolo**
. **Studio Brevetti Jaumann S.n.c. Piazza**
**Castello, 2**
**I-20121 Milano(IT)**

(54) **Photoelektrische Einrichtung zur Ermittlung von Verlusten in Schlauchfiltern.**

(57) Die Erfindung betrifft eine zur Ermittlung von Verlusten in Schlauchfiltern geeignete photoelektrische Einrichtung, gekennzeichnet durch ein monolitisches photoelektrisches System, das aus einer Lampe (1), einem halbdurchscheinenden Spiegel (4), einer Linse (2), einem Rückstrahler (3) und einer Photozelle (5) besteht, welche zu einer geflanschten mechanischen Einheit zusammengefasst sind, die mit Leichtigkeit in Luftleitungen eingebaut werden kann.

Die elektronische Schaltung besteht aus einer Operationsschaltung (6), welche den von der Photozelle (5) erzeugten Strom in eine Spannung umwandelt. Letztere wird mit der an einem Potentiometer (9) eingestellten Spannung mit Hilfe eines integrierenden Komparators (7) verglichen, welcher die Lampe (1) über einen linearen Stromverstärker (8) derart versorgt, dass der von der Photozelle (5) erzeugte Strom konstant gehalten wird, so dass die Stärke des die Prüfstrecke durchsetzenden Lichtes und damit die Erfassungsempfindlichkeit, unabhängig von jeder Veränderlichen, konstant bleiben.

## Photoelektrische Einrichtung zur Ermittlung von Verlusten in Schlauchfiltern

### Einleitung

In Fabrikverfahren, die zu einer Staubentwicklung führen, werden zwecks Wiedergewinnung und aus ökologischen Gründen Abscheide- und Filtrieranlagen (Filter) verwendet. Vielfach handelt es sich dabei um sogenannte Schlauchfilter, die verschiedenartig gestaltet und ausgebildet sind und allgemein (um Verstopfungen zu vermeiden) mit Hilfe von Druckluftstrahlen rein gehalten werden, welche in die Filterschläuche in zur Durchflussrichtung entgegengesetzter Richtung eingeblasen werden, so dass die Staubpartikel vom Filtertuch abgetrennt werden und zum Boden hin fallen, um schliesslich davon entfernt zu werden. Andere Abklopfverfahren sind ausser Gebrauch gekommen. Die das Filtriermittel darstellenden Filterschläuche bestehen allgemein aus besonderen Geweben (aus Wolle, Akrylfasern, usw.) die sich dazu eignen, den Staubanteil zurückzuhalten, die Luft durchzulassen und leicht gereinigt zu werden. Wesentliche Eigenschaften eines Filters sind 1.) der Luftdurchfluss [m³/h], 2.) die Filterfläche [m²], 3.) die Filtertuchart, 4.) die Filtriergeschwindigkeit [m/min], 5.) die Filtrierleistung [mg/m³], 6.) der Druckluftbedarf zur Reinigung [m³/h].

Für jede Arbeitsweise gibt es gesetzmässig genehmigte Normblätter, welche eine maximale Emission in die Atmosphäre (minimale Filtrierleistung) zulassen; darüberliegende Emissionswerte können gesundheitsschädliche Staubkonzentrationen zur Folge haben. Die besagten Emissionen werden durch die Filtrierleistung berücksichtigt. Für die maximale Konzentration werden Filtrierleistungen von 0,1 bis zu einigen 10 mg/m³ gefordert. Filter sind u.a. der Gefahr eines Schlauchbruches ausgesetzt; in diesem Fall entsteht ausgangsseitig eine unbeherrschbare Erhöhung der Staubkonzentration und folglich, unter Gesetzübertretung, eine unzulässige Umweltbelastung. Die beschriebene Störung wird allgemein, sofern keine automatischen Erfassungssysteme vorhanden sind, mit Verspätung und jedenfalls nur bei hellem Tage und erst dann wahrgenommen, wenn der Verlust derartige Werte angenommen hat, dass er mit blossem Auge am Filterausgang sichtbar ist, wobei diesem Zustand Staubkonzentrationen entsprechen, welche di maximal zulässigen Werte um mehr als eine Grössenordnung überschreiten.

### Stand der Technik

Es sind verschiedenartige Systeme bekannt: 1.) Photoelektrische Systeme, welche die Staubkonzentration in der Luft messen (Undurchsichtigkeitsmesser). Solche Einrichtungen sind sehr teuer, wenn sie auch genau und empfindlich sein sollen. 2.) Messung der Druckänderungen im Filter. Im Falle eines Schlauchbruches sollte der Druck theoretisch sinken. In Wirklichkeit sind zu viele Ursachen für eine Druckänderung verantwortlich und jedenfalls wäre ein gleichzeitiger Bruch mehrerer Filterschläuche erforderlich um eine aussagekräftige Änderung des Energiegefälles zu bewirken. Die bekannten photoelektrischen Systeme beruhen auf der Messung der Lichtabsorption, die durch den zwischen einer Lichtquelle und einer Photozelle vorhandenen Staub verursacht wird, wobei die Photozelle in einer Schaltung angeordnet ist, welche ein dem empfangenen Licht proportionales Ausgangssignal liefert. Die bei der Verwirklichung derartiger Einrichtungen auftretende Schwierigkeit besteht darin, eine ausreichende Langzeitstabilität zu erhalten. Damit wenige Milligramm Staub pro Kubikmeter erfassbar werden ist andererseits eine hohe Empfindlichkeit erforderlich. Die optischen System verden darüberhinaus verschmutzt, da sie dem Verfahren unmittelbar ausgesetzt sind, und verfälschen daher die Ergebnisse. Eine Langzeitkompensation ist jedenfalls nur schwer zu bewerkstelligen. Aus den genannten Gründen sind derzeit erhältliche, zweckentsprechende Einrichtungen sehr kostspielig.

### Aufgabenstellung, Erfindung und deren Vorteile

Die Erfindung liegt daher in erster Linie die Aufgabe zugrunde, eine photoelektrische Einrichtung zur Ermittlung von Staubverlusten in Schlauchfiltern zu schaffen, die es ermöglicht, geringe Staubverluste unverzüglich als Anzeichen für den Bruch eines oder mehrerer Filterschläuche anzuzeigen. Als weitere Aufgabe soll ausgangsseitig ein der ermittelten Staubkonzentration proportionales elektrisches Signal (4-20 mA) zur Verfügung gestellt werden, das als Bezeugung der Geschichte der Einrichtung auf Band oder Registrierpapier aufzeichnungfähig ist. Erreicht wird dies erfindungsgemäss mit den kennzeichnenden Merkmalen des Hauptanspruchs. Dabei beruht der wesentliche Erfindungsgedanke auf nachstehenden Überlegungen:
1.) Alle Filter müssen periodisch gereinigt werden.
2.) Jeder Reinigungsluftstrahl bewirkt eine Umkehr der Durchflussrichtung im Filtertuch, das somit einer Reckung unterworfen wird. Infolge dieser Rekkung tritt ein geringer Staubanteil (mit kleiner Körnung) durch das Gewebe hindurch und wird zum Ausgang hin befördert. Diese kleinen Staubmengen, die unvermeidlich und daher für das Filter als "physiologisch" zu betrachten sind, bestimmen - zusammen mit der Wiederholungshäufigkeit der Reinigungsvorgänge - die Staubemission in die Atmosphäre. Bei intaktem Filtertuch sind zumindest 90 % der ausgangsseitigen Staubkonzentration nachweisbar durch diese Staubmengen gegeben, die anlässlich der Reinigungsvorgänge freigegeben werden. Vermutlich sollen die restlichen 10 % dauernd durchtreten. 3.) Selbst bei gebrochenen oder sogar fehlenden Filterschläuchen ist die aus dem Filter kontinuierlich austretende Staubmenge nachweisbar äusserst gering im Vergleich zu der anlässlich der Reinigungsvorgänge austretenden Staubmenge. 4.) Alternierende elektrische Signale können auf einfache und wirtschaftliche Weise, unter Aufrechterhaltung eines grossen Störabstandes, verstärkt werden.

Ausgehend von diesen Überlegungen nützt die Erfindung die Möglichkeit aus, die anlässlich der ohnehinnotwendigen Reinigungsluftstrahlen an einer den ausgangsseitigen Luftstrom des Filters durchquerenden photoelektrischen Strecke erfassbaren Signaländerungen zu verstärken. Bei geringen Emissionsmengen (normaler Zustand) weist dabei das System eine solche Verstärkung auf, dass es ein eine Auslöseschwelle unterschreitendes Signal liefert. Nimmt die Emissionsmenge wegen eines Filtertuchbruches (oder aus anderen Gründen) zu, so vergrössert sich auch dieses Signal und kann schliesslich eine Alarmeinrichtung zum Ansprechen bringen. Erfindungsgemäss wird auch eine Sicherheitseinrichtung vorgesehen, welche die unvermeidliche Verschmutzung der dem Verfahren ausgesetzten optischen Systeme dadurch ausgleicht, dass sie eine unveränderliche Erfassungsempfindlichkeit sicherstellt und ausserdem einen Alarm dann auslöst, wenn entweder das optische System eine solche Verdunkelung erfährt, das damit die obere Grenze für einen möglichen Ausgleich überschritten wird, oder irgend ein Bestandteil (Lampe, Photozelle, elektronische Schaltung) zerstört ist. Ein Ausgangsstrom in Höhe von 4-20 mA ist für Fernmelde- bzw. Registrierzwecke vorgesehen.

## Zeichnung

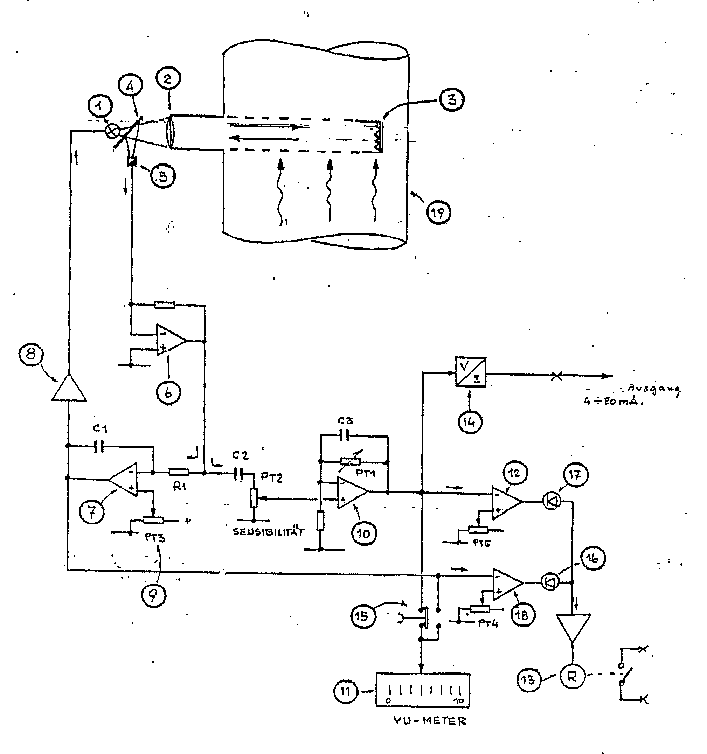

Ein Ausführungsbeispiel der Erfindung ist in der Zeichnung dargestellt und wird in der nachfolgenden Beschreibung näher erläutert.

## Beschreibung des Ausführungsbeispiels

An der vom Verfahrensmedium am Ausgang des Filters durchströmten Leitung 19 ist ein optophotoelektrisches System angebracht, das aus einer Lampe 1, einer Linse 2, einem Rückstrahler 3, einem halbdurchscheinenden Spiegel 4 und einer Photozelle 5 besteht.

Der Erregung der Lampe 1 dient ein Linearverstärker 8, der vom integrierenden Komparator 7 gesteuert wird, welcher seinerseits das Gleichstromsignal des für die Photozelle 5 vorgesehenen Verstärkers 6 erhält. Bei dieser Schaltungsanordnung mit geschlossenem "Loop" durchsetzt das von der Lampe emittierte Licht den halbdurchscheinenden Spiegel 4 und die Linse 2, wird sodann vom Rückstrahler 3 und vom halbdurchscheinenden Spiegel 4 auf die Photozelle 5 zurückgeworfen und bewirkt damit eine Erhöhung der Ausgangsspannung des Verstärkers 6. Diese Spannung wird mit der am Potentiometer 9 (PT3) für den integrierenden Komparator 7 eingestellten Spannung verglichen.

Die integrierende Funktion dieses Komparators 7 bewirkt eine sehr langsame Änderung des entsprechenden Ausgangssignals, wodurch der Lampe 1 über den Linearverstärker 8 eine solange zunehmende Versorgungsenergie zugeführt wird, bis die Ausgangsspannung des Verstärkers 6 genau den gleichen Wert wie die am Potentiometer 9 (PT3) eingestellte Spannung erreicht, wobei letztere den einmal eingestellten Wert sehr stabil beibehält aufgrund der grossen Verstärkung des Komparators und aufgrund der durch die Baugruppe R1-C1 sichergestellten Integration, die für eine Dämpfung jeder Schwingung sorgt. Dabei liegt die Zeitkonstante der genannten RC-Baugruppe in der Grössenordnung einer Minute.

Wenn nun Staubpartikel in den Lichtstrahl eindringen, so erhält die Photozelle weniger Licht und daher nimmt das am Ausgang des Verstärkers 6 anstehende Signal ab. Genutzt wird diese Signalabnahme erstens vom integrierenden Kompensator 7, welcher - aufgrund der soeben beschriebenen Eigenschaften - sehr langsam eine Zunahme der an der Lampe anliegenden Spannung bewirkt und damit die entstandene Lichtabnahme wieder ausgleicht, und zweitens vom Verstärker 10, welcher wegen der kapazitiven Eingangsbeschaltung (C2-PT2) nur den Wechselstromanteil der Signaländerung verstärkt. Das am Ausgang dieses Verstärkers 10 erscheinende Signal erfüllt folgende Zwecke:
A) Das Signal wird an einem Balkenanzeiger 11 sichtbar gemacht, welcher derart geeicht ist, dass sein Zeigerausschlag der Signalstärke proportional ist. B) Das Signal bewirkt am Ausgang des Verstärkers 14 einen Ausgangsstrom in Höhe von 4-20 mA. C) Das Signal bewirkt die Entregung eines Relais 13, sobald es einen vom Komparator 12 vorbestimmten Wert erreicht, und zeigt die Auslösung mittels einer Signallampe 17 an.

Die Konstanthaltung der Empfindlichkeit der Einrichtung wird dadurch erreicht, dass das zur Photozelle gelangende Licht durch das Regelsystem mit geschlossenem "Loop" konstant gehalten wird; andererseits hat der besagte Ausgleich keine Störsignale oder Fehlalarme zur Folge, da die durch die Integrierschaltung entstehende Frequenz um einige Grössenordnungen niedriger ist als die von der Anordnung 10 verstärkte Frequenz, wogegen diese Anordnung sämtliche sprunghafte Änderungen durchlässt, die von Staubpartikeln oder sonstigen Gegenständen hervorgerufen werden, die in die photoelektrische Strecke eindringen. Wenn, infolge Verschmutzung des optischen Systems bzw. Störung der Lampe, der Photozelle oder deren Beschaltung, die am Ausgang des Verstärkers 7 anstehende Spannung einen Grenzwert überschreitet, dessen Überschreitung keine Auswirkung auf die Erregung der Lampe 1 (und daher keine Kompensation) mit sich bringen würde, dann wird die Entregung des Relais 13 über den Komparator 18 veranlasst und dabei die Störungsursache mit Hilfe der Lampe 16 gemeldet. Der Wert dieser Spannung, der eine Aussage über den Sicherheitsspielraum des verfügbaren Signals darstellt, kann jederzeit durch Drücken der Prüftaste 15 am spannungsmessenden Sichtgerät 11 gemessen werden.

<div align="center">Vorteile der Einrichtung</div>

- Durch die einfache Schaltungsanordnung gegebene Möglichkeit, sehr wirtschaftliche Einrichtungen zur Ermittlung von Verlusten in Filtern herzustellen und diese Einrichtungen daher einer weit verbreiteten Verwendung zugänglich zu machen.

- Durch die ständige Selbstüberwachung mit geschlossenem "Loop" gegebene Betriebssicherheit, wodurch die einmal versiegelte Einrichtung der Anforderungen öffentlicher Überwachungsanstalten gerecht wird.

- Sinngemäss gleicher Vorteil hinsichtlich der Möglichkeit einer ständigen Überwachung mit kontinuierlicher Registrierung der entstehenden Signale in Verbindung mit der Möglichkeit, die Geschichte der Filteremissionen nachträglich zu überprüfen.

- Hohe Empfindlichkeit und gleichzeitig hohe Stabilität des Systems, so dass extrem kleine Emissionsmengen mit sehr kurzen Messstrecken (Abstand zwischen Lichtquelle und Rückstrahler) erfasst werden können. Diese letztere Eigenschaft ermöglicht eine Prüfung in Leitungen mit kleinem Durchmesser, ohne dass dabei die Empfindlichkeit beeinträchtigt wird.

- Dadurch dass anlässlich der Filterreinigung auch bei intakten Filterschläuchen ein Signal erfassbar ist, kann daran gedacht werden, eine Selbstüberwachung der Wirkungsweise zu erzielen, indem das System (durch einen hierfür vorgesehenen Taktgeber) mit den Steuerimpulsen synchronisiert wird, die eine Filterreinigung bewirken. Mit anderen Worten muss also jedem Steuerimpuls für die Reinigungssteuerung ein Signal entsprechen, das die Funktionstüchtigkeit und den ordnungsgemässen Betriebszustand der Einrichtung bestätigt. Es genügt dabei, dass die Selbstüberwachung die Anwesenheit einer Antwort auf jeden Reinigungsbefehl "feststellt".

## Ansprüche

1.- Photoelektrische Einrichtung zur Ermittlung von Verlusten in Schlauchfiltern, gekennzeichnet durch eine elektronische Schaltung bestehend aus einer Operationsschaltung (6), welche den von einer Photozelle (5) erzeugten Strom in eine Spannung umwandelt, die mit der an einem Potentiometer (9) eingestellten Spannung mit Hilfe eines integrierenden Komparators (7) verglichen wird, welcher eine Lampe (1) über einen linearen Stromverstärker (8) derart versorgt, dass der von der Photozelle (5) erzeugte Strom konstant gehalten wird, so dass die Stärke des die Prüfstrecke durchsetzenden Lichtes und damit die Erfassungsempfindlichkeit, unabhängig von jeder Veränderlichen, konstant bleiben.

2.- Photoelektrische Einrichtung zur Ermittlung von Verlusten in Schlauchfiltern nach Anspruch 1, gekennzeichnet durch ein monolitisches photoelektrisches System bestehend aus einer Lampe (1), einem halbdurchscheinenden Spiegel (4), einer Linse (2), einem Rückstrahler (3) und einer Photozelle (5), welche zu einer geflanschten mechanischen Einheit zusammengefasst sind, die mit Leichtigkeit in Luftleitungen eingebaut werden kann.

3.- Photoelektrische Einrichtung nach Anspruch 1 und 2, gekennzeichnet durch einen mit einem Kondensator (C2) und einem Potentiometer (PT2) derart am Ausgang der Schaltung (6) angeschlossenen Verstärker (10), dass nur der Wechselstromanteil verstärkt wird als Signal, das von einer Änderung der von der Photozelle (5) empfangenen Lichtmenge hervorgerufen wird, die ihrerseits auf eine Änderung der in der Prüfstrecke vorhandenen Staubmenge zurückzuführen ist.

4.- Photoelektrische Einrichtung nach Anspruch 1, 2 und 3, gekennzeichnet durch eine Anzeigevorrichtung (11) für den Wert des Ausgangssignals, welche eine Bewertung der Filteremission in sichtbarer Weise ermöglicht.

5.- Photoelektrische Einrichtung nach Anspruch 1 bis 4, gekennzeichnet durch einen zwischen dem Ausgang des Verstärkers (7) (dessen Ausgangssignal dem Speisestrom für die Lampe 1 proportional ist) und der an einem Potentiometer (PT4) abgegriffenen Referenzspannung geschalteten Komparator (18), durch welchen die Entregung eines Relais (13) bei Überschreitung einer oberen Speiseschwelle erfolgt, oberhalb welcher keine automatische Kompensation einer Verschmutzung der Optik mehr zustandekommt.

VU - METER